# EUROPEAN PATENT APPLICATION

(11) **EP 1 602 288 A1**
(43) Date of publication of application: **07.12.2005**
(21) Application number: 04013143.5
(22) Date of filing: 03.06.2004
(51) Int. Cl.: A23L 1/39, A23L 1/40, A23L 1/227, A23L 1/09, A23L 1/0522

(54) **Pasty composition for sauce and the like**

(71) Applicant: NESTEC S.A., 1800 Vevey (CH)
(72) Inventor: Labrunie, Thierry, CH-8406 WINTERTHUR (CH); Mayer, Christel, 8307 Effretlkon (CH); Mooser, Oswaldo, 8400 Winterthur (CH); Zuercher, Ulrich, 8008 Zürich (CH)
(74) Representative: Thomas, Alain

(57) **Abstract**

The present invention concerns a chilled or shelfstable pasty concentrated composition comprising starch dispersed in an aqueous base and an oily or fatty base, the aqueous base containing at least one dissolved a_{w} depressing agent and Maillard reaction components.

## Description

The present invention concerns the domain of food thickeners or binders and especially pasty sauces. The present invention concerns a chilled or shelf stable, portionable concentrated sauce composition containing non gelatinized starch and water.

The texture, unctuousness as well as the viscosity of food products like sauces, soups and gravy in simmered meals, like stew for example, are very important organoleptic features for this type of dishes.

The unctuousness of sauce and gravy are traditionally obtained by a combination of fat and polysaccharides such as starch. Cream and butter are often used for providing creaminess and bodyness while flour gives the viscosity to the mixture.
However, the preparation of unctuous sauces like bechamel is cumbersome. Indeed it involves several steps such as the preparation of a roux, i.e. heating flour in fat until desired colour is obtained, followed by addition of a liquid, then homogenization and lengthy cooking of the obtained mixture in order to produce a smooth texture as well as for gelatinizing the starch granules. This is a long and cumbersome procedure.
Regarding binding and thickening of sauces, it is known in the culinary art to add a couple of table-spoons of flour, dispersing it in the cold liquid phase, bring to the boil and simmering the mixture in order to develop viscosity and unctuousness.

Some ready-for-use binders or thickeners are available on the market. These are mainly in the form of powdery or granulated product made of non-gelatinized and/or pre-gelatinized starch agglomerated alone or with maltodextrines, fat and optionally emulsifiers.
Such products are not always easy to dissolve and often lead to the formation of lumps in the saucepan. Moreover due to their fat content, these products are not always well perceived by consumer because of nutritional and fitness concerns.

Dry-foods mixtures containing Starch are easily manufactured and distributed to the trade as well as being stable against degradation. In order to obtain the desired end product or benefit, the prescribed recipe must be followed. Also, if the consumer wishes to add further thickener in the course of the simmering of the thickened sauce, there may be some problem of lumping.

In EP 0 012 465 discloses pasteurized water-based concentrates in sealed containers. In order to minimise the swelling of the starch during pasteurisation, the osmotic pressure of the composition is increased as to obtain a water activity (aw) of 0.77 to 0.92 using a series of suitable compounds like salts, glycerol, glucose, protein hydrolysates. The disposable sealed containers (portions) are stored at room temperature until consumption. The concentrates are packaged in single-use container in order to avoid the problem of stability once the packaging is opened.

EP 0 970 619 describes ambient stable concentrates which yield, upon dilution with an aqueous liquid, a finished sauce, soup or gravy. The microbial stability is achieved here mainly by a pH of 4 or lower. Since kitchen salt is also added in a proportion of 1 % to 8 %, the accompanying lowering of the water activity also helps slightly to increase the microbial stability of the concentrate. The water activity of the examples given in EP 0 970 619 is of 0.96 to 0.98 at a kitchen salt concentration of 5 %.

Another product is known from US 3 949 104. In contrast to the above examples using hot swellable (or so called cook-up starches, e.g. native starches), US 3 949 104 describes a formulation were granular cold swellable starches (e.g. chemically modified starches) are dispersed in an aqueous dispersing system containing a swelling inhibitor. In this way, the concentrate will not thicken until it is added to a sufficient amount of water as to dissipate the inhibitor effect of the dispersing medium.

The aim of the present invention is to provide a convenient concentrated sauce that is easy to manufacture, chilled or shelfstable without preservatives either packaged or after opening and that can allow the reconstitution of a thick or unctuous sauce. The dilution of the concentrated sauce is between 40 g/l and 250g/l.

The present invention concerns a chilled or shelfstable pasty concentrated composition comprising starch dispersed in an aqueous base and an oily or fatty base, the aqueous base containing at least one dissolved a_{w} depressing agent and Maillard reaction components.

Under Maillard reaction components, we understand in the present specification components obtained through a Maillard reaction between a product containing amino groups, like a meat extract and reducing sugars, like glucose or other sugars commonly used in the technique. This means that there are endogeneous compounds.

Starch that can be used in the composition according to the present invention may be any food starch either native or modified ones. Suitable starch may be selected from the group comprising potato starch, maize starch, wheat starch, and rice starch used alone or in combination. The starch may be in a native or modified form, either physically or chemically modified. Preferably, the starch used is a native potato starch.

It is preferred that the starch contained in the present composition be in an unswollen state, even mixed with melted fat or oil, because if swollen, it would have a too thick consistency that could prevent the optimal flowability as well as the pourability, manipulation and of course convenience of the composition. However, it is conceivable that a minor part of the starch be in a swollen state, namely less than about 5 %, preferably less than about 2 % ; depending on the amount of water, aw depressing agent and on the type of packaging used. Thus, the remainder of - or all - the starch of the composition will be swollen upon heating the product wherein it is used, simultaneously or after diluting the concentrated composition.
In the present invention the aqueous base usable as suspending medium for the starch contains at least one dissolved a_{w} depressing agent selected in the group comprising sugars, sugar derivatives such as polyols, inorganic salts, salts of organic acids.

Suitable a_{w} depressing agent may be sorbitol and / or glucose since they show the combined advantages of high solubility, strong water binding capacity leading to low a_{w} value as well as suitable viscosity in order to maintain the composition of the present invention in a spoonable pasty state.

The composition according to the invention is a spoonable pasty product at room temperature and at 4 °C. This is an important feature of the invention, that the composition remains spoonable also when stored in the fridge.

As a general composition, the composition according to the invention comprises from about 10 % to 30 % of water, from about 5 % to 30 % of sorbitol and/or glucose, from about 10 % to 40 % of starch, from about 0.1 % to 30 % of fat or oil and Maillard reaction components. According to a preferred embodiment of the invention, the composition according to the invention comprises from about 15 to 25 % of water, from about 10 to 20 % sorbitol and/or glucose, from about 15 to 30 % of starch, from about 5 to 15 % of fat or oil and Maillard reaction components.

The composition may also be supplemented with compounds like frozen ingredients, proteins, flavour precursors, amino acids, reducing sugars and a variety of raw materials for foodstuffs like salt, yeast and other extracts, aromas, and other ingredients used for producing soups and sauces.

The proteins are taken from the group consisting of meat ingredients and hydrolisates. The reducing sugars, the amino acids and the other ingredients are ingredients commonly used in the production of flavors.

Additionally, vegetable and meat extract in powder or in liquid form, or powders may be added to the present composition and for example, extracts or powder from onion, garlic, carrot, celery, tomato, beef, pork and the like may also be added in the composition.
Suitable fat may be of vegetal or animal origin whether fully or partially hydrogenated or non-hydrogenated ones. These may be oil, shortening, butter or any suitable food grade fat. This fat or oil can be melted with starch to help for starch dispersibility in the liquid mix and thus avoid lumps.

The "aqueous base" of the composition according to the present invention may coming from ingredients but can also be pure water.
The present composition may also be coloured with any food grade colorant or flavouring such as caramel or process flavours, for example.

The thickener composition according to the present invention can be turned into a sauce, a sauce base just be diluting with water or any aqueous liquid, whether cold or hot, such as milk, wine, bouillon or gravy for example. Gently stirring will be necessary as well as boiling for a few minutes in order to obtain the right and homogeneous consistency.

The present invention concerns finally a process for the preparation of a composition according to the invention, wherein the water, the sorbitol and/or glucose, the starch, the oil or fat and the other dry and wet ingredients are mixed together and heated to induce the Maillard reaction and obtain the final product. According to another feature of the process of the invention, the starch and the oil or fat are partially or totally added after the Maillard reaction at a temperature below the Maillard reaction temperature.

### Example

Meat extract, glucose, yeast, salt, flavors, aroma are mixed together, heated at a temperature around 90 °C during 1 hour to induce the Maillard reaction. At the end of the reaction, the temperature is lowered below 90 °C and Cremalys 516 ( registered Trade-Mark for potato starch) and sunflower oil are added to this mixture to obtain the composition according to the invention being pasty and spoonable. This composition is kept in the fridge and has an Aw of 0.65.

The composition of the basic mixture is following :

| Ingredients | % |
|---|---|
| Wet ingredients | 35 |
| Glucose | 17 |
| Dry ingredients | 21 |
| Oil and starch | 27 |

Thanks to the addition of sorbitol or glucose on the wet ingredients, water molecules cannot swell starch particles and thus allows the addition of a high amount ( around 20 %) of starch in a pasty product. The final product is still spoonable. The addition of a mix oil/starch allows a good dispersability of the starch in the paste. The Maillard reaction develops additional flavours. As already said before, when stored in the fridge at 4 °C, the composition of the invention is still spoonable.

## Claims

1. Chilled or shelfstable pasty concentrated composition comprising starch dispersed in an aqueous base and an oily or fatty base, the aqueous base containing at least one dissolved a_{w} depressing agent and Maillard reaction components.

2. Composition according to claim 1, **characterized in that** the starch is in an unswollen state.

3. Composition according to claim 1, **characterized in that** the a_{w} depressing agent is selected in the group comprising sugars, sugar derivatives such as polyols, inorganic salts, salts of organic acids or combination thereof.

4. Composition according to claim 3, **characterized in that** the aw depressing agent is sorbitol and/or glucose.

5. Composition according to claim 1, **characterized by** a spoonable pasty product at room temperature and at 4°C.

6. Composition according to any of claims 1 to 5, wherein the oil or fat is taken from the group consisting of animal or vegetable fat or oil.

7. Composition according to claim 1, **characterized in that** it comprises from about 10 % to 30 % of water, from about 5 % to 30 % of sorbitol and/or glucose, from about 10 % to 40 % of starch, from about 0.1 % to 30 % of fat or oil and Maillard reaction components.

8. Composition according to claim 7, **characterised in that** it comprises from about 15 to 25 % of water, from about 10 to 20 % sorbitol and/or glucose, from about 15 to 30 % of starch, from about 5 to 15 % of fat or oil and Maillard reaction components.

9. Process for the preparation of a composition according to any of claims 1 to 8, wherein the water, the sorbitol and/or glucose, the starch, the oil or fat and the other dry and wet ingredients are mixed together and heated to induce the Maillard reaction and obtain the final product.

10. A process according to claim 9, wherein the starch and the oil or fat are partially or totally added after the Maillard reaction at a temperature below the Maillard reaction temperature.
